# EUROPEAN PATENT APPLICATION

(11) **EP 1 365 072 A1**
(43) Date of publication of application: **26.11.2003**
(21) Application number: 02011500.2
(22) Date of filing: 25.05.2002
(51) Int. Cl.: E02D 31/00, E02D 31/02, E02D 31/06, E02D 17/20, E02B 3/12

(54) **Levee**

(71) Applicant: Chu, Julia, Christchurch (NZ)
(72) Inventor: Chu, Chun-Kuang, Taipei (TW); Chou, Ming-Hui, Taipei (TW)
(74) Representative: LOUIS- PÖHLAU- LOHRENTZ

(57) **Abstract**

A levee is composed of multiple annular units (40) serially connected with at least one securing device (50) between adjacent units and having therein cobblestones (60).

## Description

### 1. Field of the Invention

The present invention relates to a levee, and more particularly to a levee composed of multiple annular units serially connected and each annular unit having therein cobblestones, dirt and sand so that when all of the annular units are employed along an appropriate location, not only the integrity of the riverbank or the like is protected, but also the environmental conservation is taken into consideration.

### 2. Description of Related Art

Nowadays, the existing levee is made of cement and steel bars so that the rigidity of the levee is good. However, when building this kind of levee the issue of environment conservation is not taken into consideration. That is, when the levee is finished, it is almost impossible to grow any plant on the levee. Besides, it is well known that cement and steel bars have little elasticity so that the levee made of cement and steel bars can not provide a buffer effect when exposed to certain stresses such as subsidence of the ground, earthquakes and so on. Thus, serious danger may occur to people living near the levee if the levee suddenly breaks up and controlled water is released to cause a flash flood. Furthermore, because the levee naturally experiences pressure from water, when there is a small crack occurs in the levee, the small crack may become aggravated by the pressure of the water. To overcome the shortcomings, the present invention tends to provide an improved levee to mitigate and obviate the aforementioned problems.

The primary objective of the present invention is to provide an improved levee composed of multiple annular units serially connected and having cobblestones, sand and dirt therein. With the levee of this kind, not only plants can grow on the levee so as to take the environment conservation issue into consideration, but also a buffer effect can be provided to eliminate the risk of total collapse of the levee.

Another objective of the present invention is to provide a securing device to secure the connection between two adjacent annular units so as to ensure that the connection between two adjacent annular units is firm.

Other objects, advantages and novel features of the invention will become more apparent from the following detailed description when taken in conjunction with the accompanying drawings.

### In the drawings

Fig. 1 is a perspective view of a single annular unit;
Fig. 2 is a schematic view showing one embodiment of the levee of the present invention;
Fig. 3 is a schematic view showing another embodiment of the levee of the present invention;
Fig. 4 is an implementation of the levee of the present invention; and
Figs. 5 and 6 are schematic views showing the implementation of the levee in a riverbed to intercept sand.

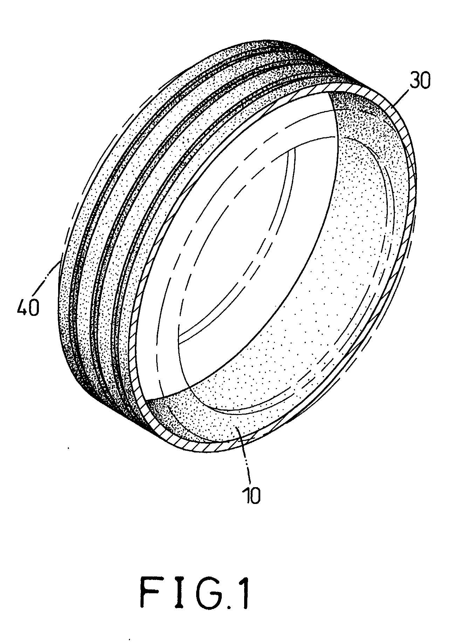

With reference to Fig. 1, the levee constructed in accordance with the present invention has multiple annular units (40). Each annular unit (40) is a tire, such as a car tire, in this preferred embodiment. The annular unit (40) has two rubber walls (10). At least one rubber wall (10) is removed along a predetermined line (30).

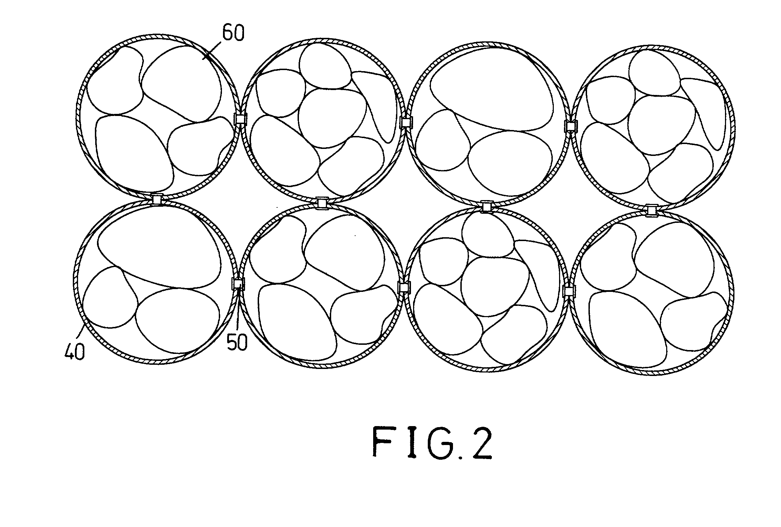

With reference to Fig. 2, each of the annular units (40) is connected to another one via a securing device (50) which is selected from a group consisting of nails, rivets and the like in this embodiment. It is to be noted that there are at least two securing devices (50) are employed on one annular unit (40) so as to secure the connection between two adjacent annular units (40). Cobblestones (60) are securely received inside the annular unit (40) to increase the weight of the annular unit (40) whereby resistance to water current is created by the weight of the annular unit (40).

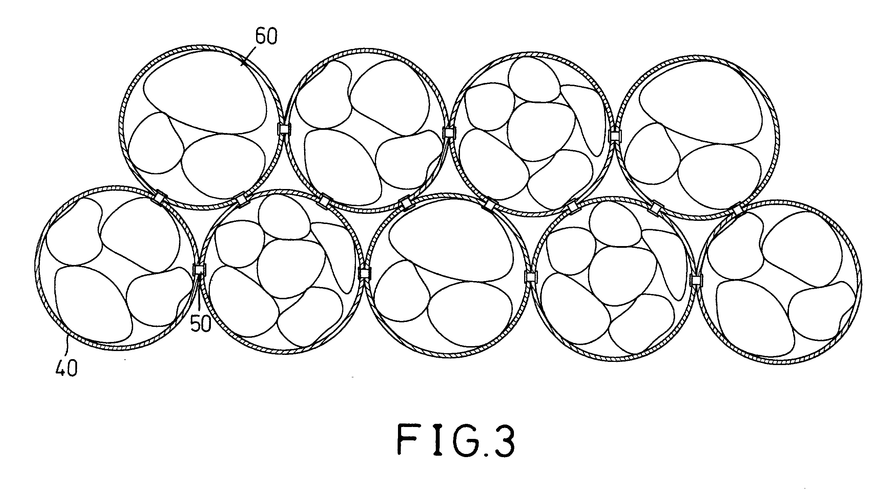

With reference to Fig. 3, it is seen that the connection between two adjacent annular units (40) is based on at least three securing devices (50).

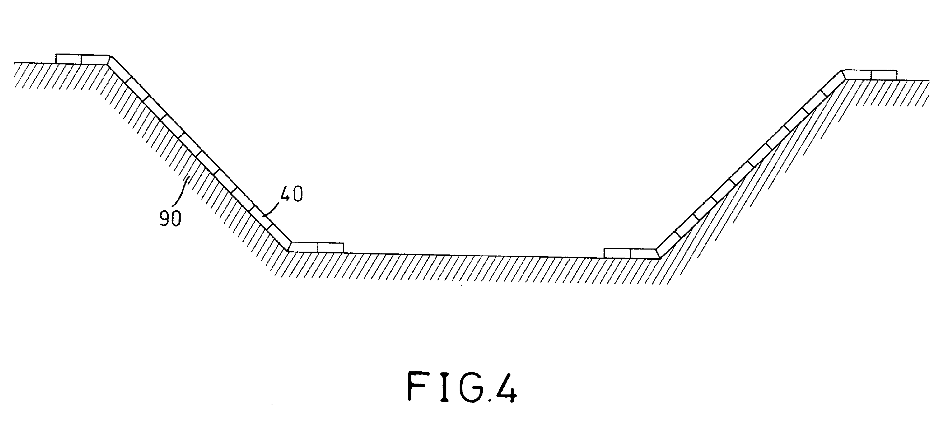

With reference to Fig. 4, it is to be noted that after the annular units (40) are connected side by side with one another, the connected annular units (40) are deployed along a riverbank (90) with a slope of less than 30 degrees so as to stabilize the riverbank (90). Furthermore, beside the cobblestones (60) inside the annular unit (40), there is also sand and dirt added into each of the annular units (40) so that plants can grow on the combined annular units (40) to further enhance the integrity of the riverbank.

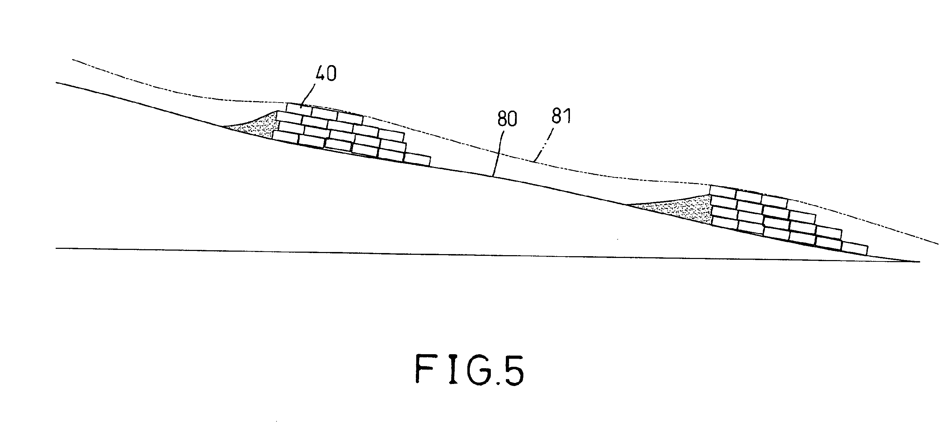

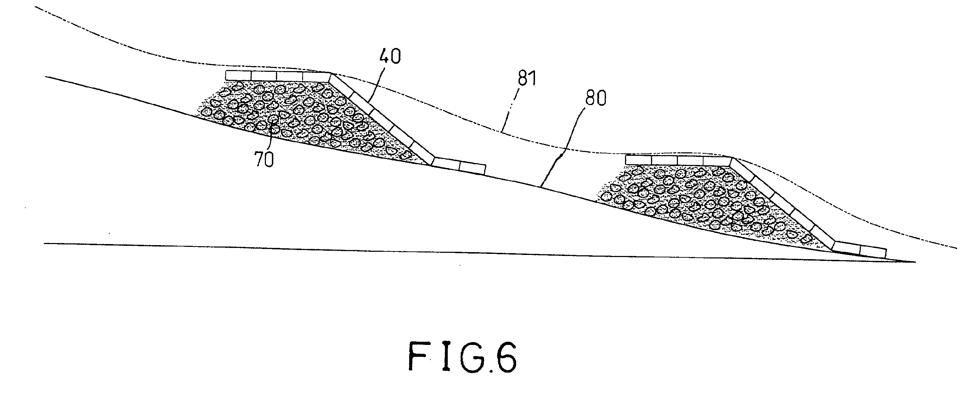

With reference to Figs. 5 and 6, the combined annular units (40) can be employed on a riverbed (80). That is, multiple layers of combined annular units (40) are stacked on top of one another to intercept and retain sand in the river (81) whereby the levee formed by the annular units (40) is strengthened, and sand and silt are prevented from undesirably affecting the depth of the river in other places. Moreover, pebbles (70) may be employed on the riverbed (80) first and then one layer of combined annular units (40) is deployed on top of the pebbles (70) to accomplish the purpose of intercepting sand in the river (81).

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A levee comprising:
multiple annular units (40) serially connected via at least one securing device (50) extending between each two adjacent annular units (40), and having therein cobblestones (60).

2. The levee as claimed in claim 1, wherein two securing devices (50) are implemented to one annular unit (40) so as connect to an adjacent annular unit (40).

3. The levee as claimed in claim 1, wherein three securing devices (50) are implemented to one annular unit (40) so as to connect to an adjacent annular unit (40).

4. The levee as claimed in claim 2, wherein the securing device (50) is selected from a group consisting of nails, rivets or the combination thereof.

5. The levee as claimed in claim 3, wherein the securing device is selected from a group consisting of nails, rivets or the combination thereof.

6. The levee as claimed in claim 1, wherein the annular unit (40) is a tire with at least one rubber wall (10) removed.
